# EUROPÄISCHE PATENTSCHRIFT

(11) **EP 0 740 896 B1**
(45) Veröffentlichungstag und Bekanntmachung des Hinweises auf die Patenterteilung: **12.12.2007**
(21) Anmeldenummer: 96102458.5
(22) Anmeldetag: 19.02.1996
(51) Int. Cl.: A01B 79/00

(54) **Verfahren und Vorrichtung zur Einsatzoptimierung von Landmaschinen**
Method of and device for optimizing operation of agricultural machines
Méthode et dispositif d'optimisation pour l'opération de machines agricoles

(30) Priorität: 15.04.1995 DE 19514223
(43) Veröffentlichungstag der Anmeldung: 06.11.1996
(73) Patentinhaber: CLAAS KGaA, 33428 Harsewinkel (DE)
(72) Erfinder: Weigelt, Horst, Dr., 33332 Gütersloh (DE); Wippersteg, H. H., 32257 Bünde (DE); Böttinger, Stefan, Dr., 33647 Bielefeld (DE); Steckel, Thilo, 33428 Harsewinkel (DE)

(56) Entgegenhaltungen:
- EP-A- 0 631 906
- DE-A- 4 322 293
- US-A- 5 092 819
- US-A- 5 260 875

## Beschreibung

Über das Jahr verteilt müssen in der Landwirtschaft die verschiedensten Geräte und Maschinen eingesetzt werden, um die jahreszeitlich bedingten Bearbeitungsaufgaben erledigen zu können. Neben der Bodenbearbeitung und Ausbringung der Saat sind ferner Dünge- und Pflegearbeiten sowie Ernte- und Transportarbeiten zu erledigen. Außerdem sind Bonituren der Ackerflächen durchzuführen sowie wichtige Beobachtungen bei Feldarbeiten festzuhalten und abzuarbeiten (Steinbesatz, Verunkrautung, Staunässe, etc.). In den vergangenen Jahrzehnten sind die technischen Konzepte für diese Geräte und Maschinen so weit ausgereift, daß eine Funktionsverbesserung nur noch mit exponentiell steigendem Aufwand bei immer geringer werdendem zusätzlichen Nutzen erreicht werden kann.

Neben den mechanischen Verbesserungen in den Geräten und Maschinen hat in den vergangenen Jahren insbesondere die Optimierung durch den Einsatz von Elektronik in den Maschinen und Geräten eine immer größere Rolle gespielt. Einen guten Überblick über den dabei erreichten Stand der Technik erlaubt das Buch von Hermann Auernhammer, Elektronik in Traktoren und Maschinen, BLV Verlagsgesellschaft, München 1989, in dem die Einsatzgebiete der Elektronik, die Funktionen sowie die Entwicklungstendenzen beschrieben werden. So ist es bekannt, landwirtschaftliche Maschinen und Geräte mit Sensoren, Prozessoren und Faktoren auszustatten, die Überwachungs-, Steuerungs- und Regelungsaufgaben übernehmen. Die Elektronik ist dazu in der Lage, Betriebszustände zu erkennen, diese Betriebszustände auszuwerten und die Maschineneinstellung anhand vorgegebener Kennlinien auf die jeweils ermittelten Einsatzbedingungen hin zu optimieren. Neben der automatisierten Optimierung der Einzelmaschine ist die Elektronik auch dazu in der Lage, Abweichungen der Betriebszustände von vorgegebenen Sollzuständen zu diagnostizieren, Vorschläge für die Maschinenbedienung zu machen und Daten zu sammeln, die in späteren Arbeitsschritten durch andere Maschinen genutzt werden können. Auf Seite 74 seines Buches schlägt Auernhammer vor, die maschinengestützt ermittelten Daten als Basiswerte für die Betriebsführung weiter zu nutzen. Dazu müssen sie in die dafür benötigte Form gebracht und der Betriebsführung zugeführt werden. Die von den wie Auernhammer vorschlägt - Traktoren ermittelten Daten sollen dabei in den an sich bekannten Schlagkarteien weiter verarbeitet werden. Als Kommunikationsmittel zwischen dem Betriebsrechner und den Einzelmaschinen beschreibt Auernhammer dabei den Datentransfer auf den Seiten 99 bis 102 mittels einer fest installierten Leitung, mittels einer sogenannten RAM-Box oder mittels einer Chipkarte.

Eingangs des 7. Kapitels weist Auernhammer darauf hin, daß die von der Elektronik ermittelte Information nicht isoliert betrachtet werden darf, sondern im Verbund gesehen werden muß und der Informationsfluß das oberste Ziel sein muß. Auernhammer fordert, die Elektronik in einem Gesamtsystem zu betrachten. Auernhammer entwickelt eine hierarchische Einordnung des Elektronikeinsatzes in der Landwirtschaft, bei der auf der untersten Ebene die Prozeßsteuerung, auf der mittleren die Betriebsführung und auf der obersten Ebene die überbertriebliche Einbindung des Betriebes in ein Rechenzentrum steht. Als Voraussetzung für eine problemlose Kommunikation zwischen der aufgezeigten Ebenen erwähnt Auernhammer auf Seite 166 1. landwirtschaftlich geeignete, zuverlässige physikalische Verbindungen (Leitungen), 2. einheitliche Datenformate und 3. definierte Dateninhalte.

Die Patentanmeldung DE 43 22 293 beschreibt ein Verfahren zum elektronischen managen von landwirtschaftlichen Maschinen bei dem zwischen den Maschinen und einer Rechnerstation telemetrisch Daten ausgetauscht werden. Beispielhaft wird in dieser Anmeldung angeführt, daß bei Bestellarbeiten aufgrund neuer, aktueller Daten von einer stationären Rechnerstation und/oder einem Prozeßrechner einer Erntemaschine aus dem Prozeßrechner auf der Bestellmaschine diese neuen Daten übermittelt werden und so von außen über telemetrischen Datenaustausch in den Bestellvorgang eingegriffen wird.

Um eine aussagefähige Datenbasis für die Steuerung einer Mehrzahl von landwirtschaftlichen Maschinen durch eine Rechnerstation zu erhalten, ist es erforderlich, eine möglichst große Vielzahl von Daten zu sammeln und aufzuarbeiten. Da jedoch die Speicher- und Datenübertragungskapazitäten teuer bzw. begrenzt sind, entsteht bei unstrukturierter Datensammlung und -übertragung das Problem, das nicht genügend Speicherplatz oder Übertragungskapazität zur Verfügung steht und deshalb entweder mit großem Aufwand die Kapazität erweitert oder die telemetrisch zu übertragende Datenmenge verrringert werden muß, was mit einer Funktionsverschlechterung des Gesamtsystems einherginge.

Aufgabe der vorliegenden Erfindung ist es, ein Verfahren zum telemetrischen Datenaustausch von Landmaschinen zu finden, bei dem die Speicherung und telemetrische Übertragung von Daten so optimiert ist, daß die Sammlung einer genügend aussagekräftigen Datenmenge mit möglichst geringer Belastung der Speicher- und Datenübertragungskapazitäten möglich ist und der Datenaustausch dazu genutzt wird, die Gesamtheit der mit dem Leitrechner im Datenaustausch stehenden landwirtschaftlichen Maschinen und Geräte zu optimieren.

Die erfindungsgemäße Aufgabe wird wie beansprucht gelöst durch eine besondere Organisation des Datenflusses sowie einer besonders vorteilhaften Lokalisierung der abgespeicherten Daten. Zentrales Element für die Optimierung des Einsatzes einer Mehrzahl von Maschinen ist der Leitrechner. In diesem Leitrechner werden die aktuellen Positionen der zu optimierenden Maschinen und Geräte dargestellt, die aktuellen Betriebszustände werden gespeichert, der Verbrauch bzw. Bedarf an Hilfs- und Betriebsstoffen (z.B. Kraftstoff, auszubringendes Saatgut, Dünger oder sonstigen Chemikalien) wird übermittelt und der voraussichtliche Zeitpunkt sowie die voraussichtliche Menge von Ersatzmaterialien sowie gegebenenfalls erforderlich werdende Wartungsarbeiten werden angemeldet. Diese von den Maschinen und Geräten eingehenden Daten werden vom Leitrechner in einer Weise abgelegt, die eine kontinuierliche Verarbeitung dieser Daten ermöglicht. Die von den Maschinen eingehenden Daten werden mit den jeweils vorliegenden Auftragsdaten, Schlagkarteien und logistischen Möglichkeiten abgeglichen, daraus evtl. eforderliche Anpassungen der Betriebsparameter der einzelnen Maschinen oder Geräte ermittelt und diese Stellbefehle an die davon betroffenen Maschinen oder Geräte weitergeleitet.

Zusätzlich können für den Leitrechner verfügbare externe Daten in die Ermittlung optimierter Betriebsparameter einbezogen werden. Als externe Einflußgrößen kommen beispielsweise regionale Wetterprognosen, Ersatzteil- und Wartungsinformationen eines Landmaschinenhändlers, chemische Boden- oder Grundwasseranalysen oder Düngepläne bzw. bereitgestellte Ausbringungsmengen für Klärschlamm, Gülle, Kompost und anderes in Betracht. Die externen Daten können vom Leitrechner über bekannte Telekommunikationsmittel abgefragt und in den vom Leitrechner durchgeführten Rechenvorgang zur Optimierung der Betriebsparameter des Gesamtmaschinensystems integriert werden.

Außerdem können die im Leitrechner verfügbare Daten von externen Host-Rechnern oder Datenbanken abgefragt, aufgearbeitet und für dort verfügbare Informationssysteme genutzt werden, die wiederum vom Leitrechner zur Optimierung des von ihm gesteuerten Erntemaschinensystems einsetzbar sind.

Die im Bord- oder Leitrechner anfallenden Daten müssen zunächst kategorisiert werden. Als erstes Kategorisierungskriterium wird vorschlagen, die Daten danach zu unterscheiden, ob sie telemetrisch an einen anderen Rechner übermittelt werden müssen oder nicht. Diejenigen Daten, die nicht übermittelt werden müssen, werden in dem Rechner, in dem sie anfallen, weiterverarbeitet. Diejenigen Daten jedoch, die telemetrisch an einen anderen Rechner zu übermitteln sind, müssen zusätzlich nach Übertragungsdringlichkeit sortiert und jeweils die am dringendsten benötigten Daten müssen zuerst telemetrisch übermittelt werden. Dadurch wird sichergestellt, daß die Übertragungskapazitäten vorrangig mit wichtigen Daten ausgelastet werden.

Zusätzlich zur Kategorie der Übertragungsbedürftigkeit von Daten müssen die Daten nach Speicherort kategorisiert werden. Neben denjenigen Daten, die aufgrund ihrer Bedeutung und Verwertbarkeit sofort an den Leitrechner übermittelt und dort abgelegt werden, existieren in den jeweiligen einzelnen Maschinen noch Datenmengen, die entweder nur zur Optimierung der Einzelmaschine erforderlich sind oder die zwischengespeichert und zu einem späteren Zeitpunkt an den Leitrechner telemetrisch über über Speichermedien wie Disketten oder Steckverbindung übertragen werden können.

Bei der Kategorisierung des Speicherortes ist eine optimale Verfügbarkeit der jeweiligen Daten bei möglichst geringer Belastung der Übertragungs- und Speicherkapazitäten anzustreben. So kann es je nach Art der Daten sinnvoll sein, diese auf den Maschinen und Geräten, auf dem Leitrechner oder auf externen Datenbanken bereitzuhalten. Grundsätzlich gilt dabei die folgende Regel zur Datenlokalisierung: soweit Daten nur zur internen Regelung einer Einzelmaschine oder eines Einzelgerätes benötigt werden, ohne daß diese Daten Einfluß haben auf die Optimierung eines Gesamtmaschinensystems, sollten diese auch nur auf der jeweiligen Maschine oder dem Gerät vorgehalten werden. Sobald die Daten jedoch einen Einfluß haben auf das Gesamtmaschinensystem, sollten diese Daten an den Leitrechner übertragen werden. Sobald die im Leitrechner vorhandenen Daten extern genutzt oder benötigt werden, sollten die entsprechenden Daten für externe Rechner zur Verfügung stehen. Abweichend von diesem Grundsatz wird eine Flexibilisierung der Datenlokalisation in der Weise vorgeschlagen, daß bei einer höheren Abfragehäufigkeit von einem anderen Rechner als demjenigen, auf dem die jeweils vermehrt abgefragten Daten gespeichert sind, der Datensatz nunmehr in Abweichung von der grundsätzlichen Regel auf den häufig abfragenden Rechner übertragen wird, um eine Entlastung der Kommunikationsstrecken zu erreichen. Diese Verlagerung der Datenlokalisiation kann von der Software selbständig oder per Befehl des Operators vorgenommen werden.

In bevorzugter Ausgestaltung der Erfindung arbeitet der Bordrechner einer an das Gesamtsystem angeschlossenen Landmaschine mit einem CAN-Bussystem. Das Bussystem erlaubt eine kostengünstige Integration des Bordrechners in die Maschinenelektronik sowie eine standardisierte und zuverlässige Kommunikation mit allen an das CAN-Bussystem angeschlossenen Komponenten, Sensoren und Aktoren. Ein solches in eine Landmaschine integriertes CAN-Bussystem ist beispielhaft in der deutschen Patentanmeldung P 44 31 824.3 beschrieben. Zur Realisierung der telemetrischen Datenübermittlung wird vorgeschlagen, das Funkmodul nicht direkt an den Bordrechner anzugliedern, sondern als eigenes Modul mit separatem Zugang zum CAN-Bussystem anzuordnen. Eine solche Anordnung erlaubt eine bidirektionale Kommunikation des CAN-Bussystems mit dem Leitrechner unabhängig vom Bordrechner sowie einen externen Zugriff auf das CAN-Bussystem. Zudem ist das Funkmodul bei dieser Anordnung leicht nachrüstbar ohne Redesign des Bordrechners.

Zur weiteren Erläuterung der Erfindung dient die folgende Beschreibung sowie die beigefügten Zeichnungen. Es zeigt:
- Figur 1: ein erfindungsgemäß vernetztes Optimierungssystem,
- Figur 2: ein Beispiel eines CAN-Bussystems, in das das Funkmodul mit separatem Zugang eingefügt ist.

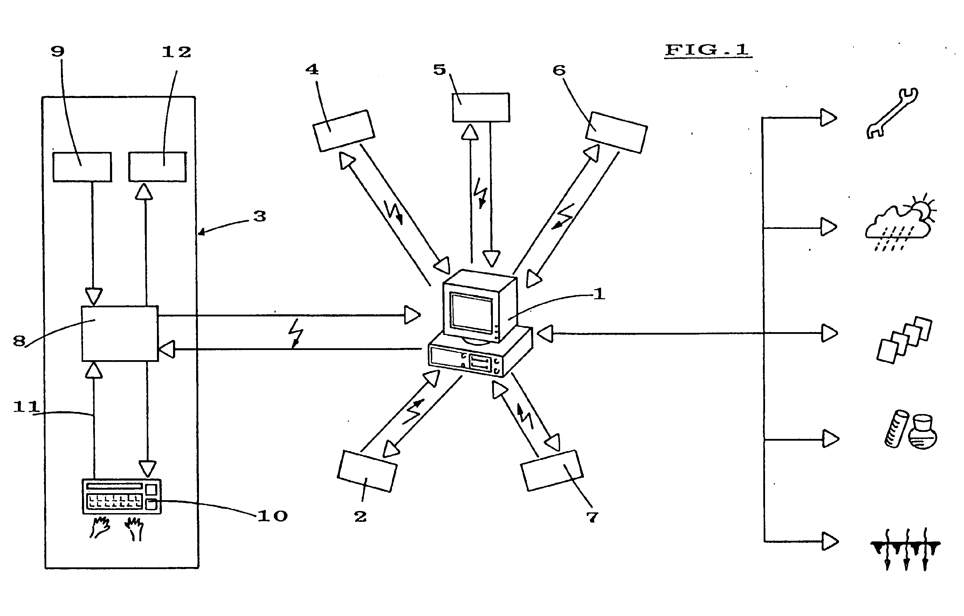

In Fig. 1 sind die landwirtschaftlichen Maschinen (2) bis (7) über eine telemetrische Datenverbindung in ständigem Datenaustausch mit dem Leitrechner (1). Bei den Maschinen (2) bis (7) kann es sich um die verschiedensten Landmaschinen handeln. Beispielhaft seien genannt Ackerschlepper mit angebauten Arbeitsgeräten wie beispielsweise Pflügen, Sämaschinen, Spritzen, Tankwagen für das Ausbringen von Gülle, Klärschlamm etc., Kompostausbringer, Mähwerken, Wendern, Schwadern, Pressen, Ladewagen, Transportanhängern, oder selbstfahrenden Arbeitsmaschinen wie Mähdrescher, Feldhäcksler und Rübenroder oder Transportfahrzeuge jeder Art. Diese Maschinen können in beliebiger Vielzahl und beliebiger Kombination mit dem Leitrechner (1) im Datenaustausch stehen.

Jede einzelne Maschine ist für sich mit einem Bordrechner (8) ausgestattet, die den Optimierungsprozeß innerhalb der einzelnen Maschine regelt. Der interne Optimierungsprozeß ist beispielhaft in Maschine (3) aufgezeigt. Der Bordrechner (8) empfängt Daten von einer Vielzahl von Sensoren (9), die er auswertet. Zusätzlich zu den Sensordaten verarbeitet der Bordrechner (8) auch Positionsdaten, die beispielsweise ein GPS-Empfänger ermittelt. Die aus den ermittelten Daten resultierenden Betriebszustände der Einzelkomponenten der Maschine (3) werden im Bedienpult (10) dem Maschinenführer angezeigt. Parallel zu den Daten von den Sensoren (9) bekommt der Bordrechner (8) die Daten von Stellbefehlen (11) des Maschinenführers übermittelt. Beide Datenströme werden von Bordrechner (8) mit vorgegebenen Kennlinien verglichen, die jeweils das Betriebsoptimum der Einzelmaschine unter Beachtung der jeweiligen Datenvorgaben darstellen. Ergeben sich Abweichungen der übermittelten Daten von den vorgegebenen Kennlinien, emittiert der Bordrechner Stellsignale an einzelne oder mehrere Aktoren (12).

Durch dieses Vorgehen ist sichergestellt, daß sich jede einzelne Maschine für sich auf der intern zur Verfügung stehenden Datenbasis in einem Betriebsoptimum befindet. In die Optimierungsregelkreise können die vom GPS-Empfänger ermittelten Positionsdaten einbezogen werden, indem die ermittelten Positionsdaten mit anderen, im Bordrechner (8) vorhandenen positionsbezogenen Daten verglichen und ausgewertet werden.

Zusätzlich zu den vorbeschriebenen internen Regelkreisen steht der Bordrechner (8) einer Maschine über den telemetrischen Datenaustausch mit dem Leitrechner (1) im Datenaustausch. Der Leitrechner (1) bekommt Daten (13) von den Maschinen (2) bis (7) telemetrisch übermittelt. Aus den übermittelten Daten und zusätzlich im Leitrechner (1) verfügbaren Daten erstellt der Leitrechner (1) ein Einsatzbild der Maschinen (2) bis (7). Aus dem Einsatzbild kann der Leitrechner (1) anhand vorgegebener Kennlinien erkennen, in welcher Weise der Betrieb einer Einzelmaschine (2) bis (7) optimiert werden kann.

Beispielsweise könnte der Leitrechner (1) aus den verfügbaren Daten ein positionsdeterminiertes Düngerausbringungsprofil errechnen, das in Abhängigkeit von beispielsweise Bodenart, Hangneigung, Feuchtigkeit und angebauter Kultur ein ökonomisch und ökologisch bedarfsgerechtes Optimum darstellt. Dieses Profil kann der Leitrechner (1) der Düngemaschine telemetrisch übermitteln, und der Bordrechner (8) der Maschine kann anhand des vorgegebenen Düngerausbringungsprofils erkennen, ob die aktuell ausgebrachte Menge an Düngemittel zu hoch oder zu niedrig ist und gegebenenfalls entsprechend in die maschineninternen Regelkreisläufe eingreifen. Anhand der vom Bordrechner (8) fortlaufend ermittelten, in eine Schlagkarte eingetragenen Menge des ausgebrachten Düngers kann der Leitrechner (1) bei Überspielung und Verarbeitung der Ist-Düngewerte erkennen, wann ein Transportfahrzeug mit der Nachlieferung von Düngemittel beauftragt werden muß, um eine kontinuierliche Arbeit der Düngemaschine sicherzustellen. Stellt der Leitrechner (1) fest, daß der Düngervorrat des Ausbringungsfahrzeugs bei gleichbeibender Arbeitsgeschwindigkeit schneller erschöpft sein wird als die nachzuliefernde Düngermenge verfügbar ist, so kann der Leitrechner (1) das Ausbringefahrzeug anweisen, zur Verringerung des Kraftstoffverbrauchs die Fahr- und Ausbringegeschwindigkeit zu verringern, den Einsatz abzubrechen und einen anderen Auftrag zu bearbeiten oder bei einer nur kleinen Fehlmenge die Ausbringemenge durch ein neues Ausbringeprofil so zu verringern, daß keine Nachlieferung von Dünger erforderlich ist. Die Anweisung, was zu tun ist, kann der Leitrechner (1) wahlweise entweder dem Maschinenführer des Düngerstreuers oder dem Bediener des Leitrechners als Vorschlag übermitteln oder der Leitrechner entscheidet selbst, wie zu verfahren ist.

Während des Betriebs eines Mähdreschers kann der Leitrechner (1) erkennen, welche Transportkapazität zum Abtanken der geborgenen Getreidemenge bereitgestellt werden muß. Anhand der Betriebsdaten der Transportfahrzeuge kann der Leitrechner (1) ermitteln, wann frühestens die erforderliche Transportkapazität verfügbar ist. Der Leitrechner (1) kann entsprechende Fahraufträge wahlweise automatisch oder auf Befehl des Bedieners des Leitrechners (1) an die Fahrer der Transporteinheiten übermitteln. Je nach Verfügbarkeit der Transportkapazität kann der Leitrechner (1) den Bordrechner (8) des Mähdreschers oder den Maschinenführer des Mähdreschers anweisen, durch Verringerung der Vorfahrtgeschwindigkeit die Körnerverluste und den Kraftstoffverbrauch zu verringern. Anhand der vom Mähdrescher durch einen Sensor (9) ermittelten Gutfeuchte kann der Leitrechner (1) den voraussichtlichen Trocknungsaufwand für das Getreide schätzen und mit der Trocknungskapazität abgleichen. Ist die Trocknerkapazität erschöpft, kann der Leitrechner (1) dem Mähdrescher vorschlagen, die Arbeit im nassen Getreide abzubrechen und auf trockeneren Flächen weiterzuarbeiten.

Die kontinuierliche Datenübermittlung von den landwirtschaftlichen Maschinen (2) bis (7) zum Leitrechner (1) erlaubt es zudem, die vorgenommenen Arbeiten und Erträge positionsgenau in einer Schlagkarte abzulegen. In der Schlagkarte sind geographische und ackerbauliche Daten der jeweiligen Ackerflächen positionsgenau in einem Koordinatenraster abgespeichert. So können anhand von Sensoren in Erntemaschinen Ertragsmengen, Boden- und Getreidefeuchte, Verunkrautung, Steinbesatz etc. ermittelt und und im Leitrechner (1) mit vorhandenen Daten in Relation gesetzt werden. Durch den Abgleich der aktuell ermittelten Daten mit vorhandenen Daten ist es möglich, sofort Beziehungen z.B. zwischen Bodenbearbeitung, Düngung, Pflanzenschutz, Bewässerung und den Erträgen herzustellen, bei unwahrscheinlichen Neu-Daten die Sensorik zu überprüfen und gegebenfalls die Neu-Daten sofort als falsch zu erkennen. Anhand der Übermittlung von Positionsdaten ist es möglich, die Fahrspuren durch den Leitrechner (1) so vorzuwählen, daß ein mehrfaches Überfahren der gleichen Bodenflächen während einer Wachstumsperiode zwecks Vermeidung einer zu hohen Bodenverdichtung möglichst ausgeschlossen wird.

Weiterhin ist vorstellbar, daß Unregelmäßigkeiten während des Betriebs einer Landmaschine von der Maschine an den Leitrechner (1) gemeldet werden. Als Unregelmäßigkeiten kommen beispielsweise Störungen im Antrieb (Betriebstemperaturüberschreitung von Öl, Kühlwasser), Betriebsstoffverluste durch Undichtigkeiten, nicht plausible Meldungen von Sensoren oder Fehlfunktionen von Aktoren in Betracht. Der Leitrechner kann die Unregelmäßigkeiten analysieren und je nach Ergebnis der Analyse die Betriebsvorgaben oder Einsatzplanung der Maschinen (2) bis (7) ändern. Gleichzeitig kann der Leitrechner (1) die Kapazitätsplanung der Werkstatt beeinflussen und erforderliche Reparaturen oder Wartungsarbeiten an den Maschinen (2) bis (7) anweisen.

Für alle anderen landwirtschaftlichen Maschinen, die an einen Leitrechner (1) angeschlossen werden, sind gleiche oder ähnliche Verbesserungen des Betriebs der Maschinen durch einen Datenaustausch mit dem Leitrechner (1) vorstellbar. Um aber die auszutauschenden Datenmengen nicht zu groß werden zu lassen, muß ein System gefunden werden, anhand dessen die auszutauschenden Daten klassifiziert und je nach Klassifikation an unterschiedlichen Orten abgespeichert und/oder weiterverarbeitet und aufbereitet werden.

Erfindungsgemäß wird vorgeschlagen, die von Bordrechner (8) erhaltenen Daten zunächst einer Auswertung im Bordrechner (8) zuzuführen. Zunächst werden die gesammelten Daten danach bewertet, ob sie an einen anderen Rechner übertragen werden müssen oder nicht. Soweit die gewonnenen Auswertedaten nur für die maschineninterne Optimierung brauchbar und durch Weitergabe eines Stellbefehls an einen Aktor (12) ausgeschöpft werden, erfolgt keine Weitergabe dieser Daten an den Leitrechner (1). Soweit der Leitrechner (1) die im Bordrechner (8) vorhandenen Daten jedoch benötigt, um ein Lagebild erstellen zu können, leitet der Bordrechner (8) diese Daten an den Leitrechner (1) weiter. Beispielhaft kommen dafür Daten über die bearbeitete Fläche, die aktuelle Position, geborgene Erntegutmengen, Sensordaten über den Zustand des Ernteguts, verbrauchte oder noch vorhandene Verbrauchs- und Betriebsstoffe in Betracht. Die Daten werden jedoch nicht in der Reihenfolge des Anfalls oder in sonstiger Reihenfolge, sondern nach Dringlichkeit gestaffelt übermittelt. Dadurch wird vermieden, daß die Übertragungsfrequenzen mit weniger wichtigen Daten verstopft werden könnten. Um den Datenstrom weiter zu verringern, wird vorgeschlagen, anstelle längerer Datensätze nur einen kurzen Hinweis auf das Vorliegen bestimmter Datenkategorien zu übermitteln, sodaß der Leitrechner (1) selbst auswählen kann, welche Datensätze er anfordert. So können beispielsweise Störungen durch ein allgemeines Warnsignal, auf das der Leitrechner (1) dann zurückfragt, gemeldet werden. Die an den Leitrechner (1) gemeldeten Daten brauchen in den Maschinen (2) bis (7) nicht mehr vorgehalten zu werden, der Bordrechner (8) kann diese Daten im Arbeitsspeicher löschen.

Der Leitrechner (1) verarbeitet die übermittelten Daten zu einem Lagebild. Das Lagebild zeigt die aktuell von der jeweiligen Maschine bearbeitete Aufgabe, den Erledigungsfortschritt sowie die nachfolgende Einsatzplanung auf. Das Lagebild wird durch die jeweils von den Maschinen (2) bis (7) eingehenden Daten aktualisiert. Neben der Lagebilderstellung bearbeitet der Leitrechner (1) auch die Ablage übermittelter Daten in Schlagkarten, die eine positionsgenaue Signatur der jeweils vorgenommenen Bearbeitung einschließlich zugehöriger Bearbeitungsdaten (z.B. Ausbringe-, Erntemenge, sonstige Sensordaten) erlaubt, sowie die weitergehende Bearbeitung der eingehenden Daten für Analysen, Abrechnungen, Plausibilitätschecks etc. Soweit die für die Lagebilderstellung erforderlichen Daten im Lagebild verarbeitet sind, können diese vom Leitrechner (1) gelöscht werden. Die übrigen eingehenden Daten werden in den jeweils zur Verfügung stehenden Dateien abgelegt, soweit sie für spätere Bearbeitungen zur Verfügung stehen müssen. Durch die zentrale Datenablage im Leitrechner (1) wird es ermöglicht, ohne zusätzliche Belastung der Funkstrecken mit zusätzlichen Datenmengen für Datenabgleiche innerhalb des vom Leitrechner (1) gesteuerten Maschinennetzes auf die zentral online abgelegten Daten zuzugreifen.

Über die telemetrische Verbindung mit den Maschinen (2) bis (7) hinaus ist der Leitrechner (1) zusätzlich mit externen Datenbanken über bekannte Telekommunikationseinrichtungen mit Hostrechnern und zentralen Datenbanken verbunden. Der Leitrechner (1) kann an die externen Kommunikationspartner aufbereitete Datenmengen senden, um von den externen Kommunikationspatnern diese Daten zu einer verdichteten Aussage aufbereitet zu bekommen. So ist es beispielsweise denkbar, von optischen Sensoren erfaßte Daten über den Unkrautbestand mittels des Leitrechners (1) an ein Expertensystem zu senden, das den Unkrautbesatz bewertet und aus der Bewertung abgeleitet einen Vorschlag für die Zusammensetzung und Ausbringemenge von Pflanzenschutzchemikalien an den Leitrechner (1) zurückübermittelt. Zusätzlich könnte der Leitrechner (1) online-Rückfragen des Expertensystems an die arbeitende Landmaschine vermitteln und so eine fast zeitgleiche Bewertung der vorzunehmenden Pflanzenschutzmaßnahmen vom Expertensystem an die arbeitende Landmaschine ermöglichen. Durch zwischengeschalteten Abgleich mit dem im Leitrechner (1) vorhandenen Datenbestand ist es zudem möglich, daß die Unkrautbonitur extern vermittelt wird für bestimmte, als stark verunkrautet bekannte Flächen, sodaß sehr gezielt für bestimmte Problemflächen spezielle Lösungen vorgeschlagen werden können.

Weiter ist denkbar, daß der Leitrechner (1) Daten mit einem Hostrechner austauscht, der Wetter- und landwirtschaftliche Feuchtigkeitsprognosen erstellt. Dabei kann der Leitrechner (1) als einer von vielen Leitrechnern die von der Maschinensensorik ermittelten Wetter- und Feuchtigkeitsdaten, beispielsweise Boden- und Kornfeuchte, als Prognose-Datenmaterial an den Hostrechner liefern, der Leitrechner (1) kann jedoch auch vom Hostrechner Hinweise auf bevorstehende Wetteränderungen und Veränderungen der Feuchtigkeitsverhältnisse bekommen. Die Prognosewerte kann der Leitrechner (1) wiederum umsetzen in Vorgabewerte für die Maschineneinsatzplanung und -einstellung der einzelnen Betriebsparameter. So können die Windverhältnisse die Planung von Spritz- oder Düngearbeiten beeinflussen, und die Boden- und Getreidefeuchtigkeit beeinflußt die Dreschbarkeit, die Befahrbarkeit der Felder oder die Wirkung von Pflanzenschutzmitteln.

Als weitere Anwendung der erfindungsgemäßen Lehre ist vorstellbar, zur Vermeidung der Überschreitung von bestimmten Grundwasser-Grenzwerten die aktuellen Meßwerte von Bodenbelastungshorizonten und von frisch gefördertem Grundwasser sowie Grundwasserströmungsmodelle von einem Expertensystem abzurufen und sich vom Expertensystem Vorschläge für die Düngung und den Pflanzenschutz machen zu lassen, die einen Anstieg der Grundwasser-Belastungswerte über die festgelegten Grenzwerte hinaus verhindert. Außerdem können vom Leitrechner (1) Dokumentationen über die tatsächlich ausgebrachten Mengen angefertigt werden, die gegenüber Behörden und Wasserwerken als Ausbringungsnachweis oder Nachweis der ordnungsgemäßen Landwirtschaft verwendet werden können. Die Daten können dazu ebenfalls vom Leitrechner (1) in der gewünschten Form aufbereitet an die Empfänger übermittelt werden.

In einer weiteren Ausgestaltung der Erfindung könnte der Leitrechner (1) bei Meldung von Betriebsstörungen durch einen Bordrechner (8) der Maschinen (2) bis (7) die Meldung zur Analyse durch ein Expertensystem an den Hersteller der betreffenden Maschine weiterleiten. Durch die Vermittlung des Leitrechners (1) wird so eine Ferndiagnose mit gleichzeitig ausgelöster Reparatur- und Ersatzteilbestellung (einschließlich ET-Verfügbarkeitscheck) möglich. Vom Expertensystem können auch über Vermittlung des Leitrechners (1) direkt Reparatur- oder Notreparaturvorschläge an den Maschinenführer gemacht werden.

Da es für die Anwendung von Expertensystemen und Wetterprognosemodellen nicht sinnvoll ist, den Leitrechner (1) mit der erforderlichen Software und Datenmaterial auszustatten, genügt für die Realisierung dieser Funktionen der Anschluß des Leitrechners (1) über Telekommunikationsmittel.

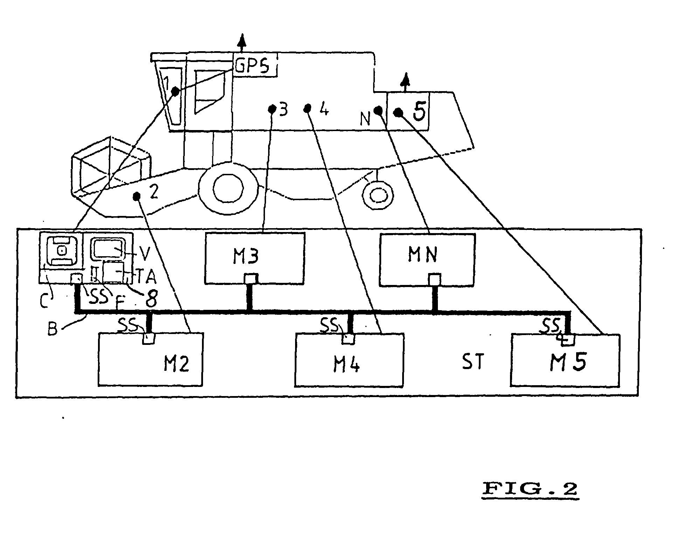

Fig. 2 zeigt ein Übersichtsschema einer mit einem CAN-Bussystem ausgerüsteten Landmaschine. Die Steuervorrichtung (ST) verfügt über ein Mikroprozessornetzwerk mit dem Bus (B). In der Fahrerkanzel ist der Bordrechner (8) installiert, der aus dem Bildschirmgerät (V), der Steuertastatur (TA), der Rechenplatine (F) sowie Speicher- und Ausgabeeinrichtungen (C) besteht und an den ein Ortungsgerät (GPS) angeschlossen ist. Die Prozessoren (8), (M2), (M3), (M4) und (MN) stellen verschiedene, über Schnittstellen (SS) an das CAN-Bussystem (B) angeschlossene Mikroprozessoren dar. Der Mikroprozessor (M5) ist das Funkmodul, das über die Schnittstelle (SS) über einen separaten Zugang zum CAN-Bussystem (B) verfügt. Das Funkmodul (M5) empfängt Signale der übrigen an das CAN-Bussystem (B) angeschlossenen Mikroprozessoren, selektiert daraus diejenigen Daten aus, die zur Weitergabe an den Leitrechner (1) bestimmt sind, komprimiert diese auf ein der Leistungsfähigkeit der allgemein oder betriebsintern verfügbaren Funkstrecke angepaßtes Format und sendet sie an den Leitrechner (1). Umgekehrt empfängt das Funkmodul (M5) Datensendungen des Leitrechners (1), dekromprimiert und addressiert sie und sendet sie über das CAN-Bussystem (B) an die angeschlossenen Mikroprosessoren. Aufgrund des einfach zu bewerkstelligenden Anschlusses des Funkmoduls (M5) an das CAN-Bussystem (B) ist die Nachrüstung eines bestehenden CAN-Bussystems (B) mit einem Funkmodul (M5) ohne weitere Anpassungen der übrigen Bus-Komponenten möglich. Auf diese Weise können ohne größeren Aufwand Maschinen in das vom Leitrechner (1) gesteuerte Maschinen-Gesamtsystem integriert werden, die vorher nicht über ein Funkmodul verfügten. Die bidirektionale Kommunikation des Funkmoduls (M5) erlaubt es nicht nur, Daten aus einer landwirtschaftlichen Maschine (2) bis (7) an den Leitrechner (1) zu übertragen, sondern es ist auch möglich, vom Leitrechner (1) aus direkt auf das CAN-Bussystem (B) durchzugreifen. So ist es vorstellbar. daß begrenzt zeitkritische Anwendungen und Funktionen direkt über das Funkmodul (M5) vom Leitrechner (1) aus gesteuert werden. So kann der Leitrechner (1) beispielsweise bestimmte Sollvorgaben direkt an einzelne an das CAN-Bussystem (B) angeschlossene Mikroprozessoren adressieren.

Auch ist es möglich, vom Leitrechner (1) aus direkt eine Diagnose der von den an das CAN-Bussystem (B) angeschlossenen Mikroprozessoren kontrollierten Maschinenkomponeten durchzuführen, gegebenenfalls unter Vermittlung externer Host-Rechner oder Expertensysteme. Der Leitrechner (1) kann über das Funkmodul (M5), das CAN-Bussystem (B) und den Bordrechner (8) dem Maschinenbediener die Durchführung von Wartungs- oder Reparaturarbeiten vorschlagen und die anstehenden Arbeiten durch mitübertragene Videobilder, Skizzen und Arbeitsanweisungen unterstützen. Solche arbeitsünterstützenden Bild- und Textinformationen können jedoch auch vom Maschinenbediener mittels des Bordrechners (8) vom Leitrechner (1) angefordert werden, der die Informationen über Speichermedien (CD-ROM, Diskette) oder extern von Hostrechnern oder Expertensystemen einliest uns sendet.

Zur Übertragung von Informationen, die der Leitrechner (1) anfordert oder benötigt, kann das Funkmodul (M5) entweder auf Datensätze zugreifen, die der Bordcomputer (8) vorbereitet hat, oder er kann selbst die erforderlichen Daten über das CAN-Bussystem (B) sammeln und aufbereiten. Auf diese Weise kann das Funkmodul (M5) einen bestimmten vom Leitrechner (1) anzeigbaren Basisbestand an Informationen wie beispielsweise die aktuelle Position, Erfüllungsgrad des Auftrags und diverse Maschinenleistungsparameter übermitteln und laufend aktualisieren.

## Patentansprüche

1. Verfahren zur Einsatzoptimierung von Landmaschinen, wobei ein Leitrechner (1) sowie eine Mehrzahl von landwirtschaftlichen Maschinen und Geräten (2) bis (7), die über zumindest einen Bordrechner (8) verfügen, über Sende- und Empfangseinrichtungen telemetrisch mit dem Leitrechner (1) Daten austauschen können,
**dadurch gekennzeichnet,**
- **dass** diese zwischen Leitrechner (1) und den Bordrechnern (8) der Mehrzahl landwirtschaftlicher Maschinen und Geräte (2) bis (7) austauschbaren Daten nach Verarbeitungs- und Speicherort kategorisiert,
- je nach Kategorie auf Ebene der landwirtschaftlichen Maschine bzw. des Gerätes weiterverarbeitet oder gespeichert werden und
- die auf die Ebene des Leitrechners telemetrisch übermittelten Daten dazu genutzt werden, um die auf den in der einzelnen Maschine verfügbaren Daten aufbauenden Optimierungsregelkreise durch vom Leitrechner (1) aufbereitete und von diesem an die einzelne Maschine übertragene nicht in der einzelnen Maschine verfügbare Daten zu ergänzen
- und wobei die Kategorisierung die Auswahl der von den Bordrechnern (8) an den Leitrechner und von dem Leitrechner an die Bordrechner (8) zu übertragenden Daten umfasst.

2. Verfahren nach Anspruch 1,
**dadurch gekennzeichnet, daß** der Leitrechner (1) neben der telemetrisch übermittelten Datenbasis aus den Maschinen zur Aufbereitung der an die landwirtschaftlichen Maschinen übermittelten Daten auch auf im Leitrechner (1) abgelegte Datenbestände und Software zurückgreift.

3. Verfahren nach Anspruch 1 oder 2,
**dadurch gekennzeichnet, daß** der Leitrechner (1) zur Aufbereitung der an die landwirtschaftlichen Maschinen zu übermittelden Daten auch auf Software und Datenbestände zurückgreifen kann, die in externen Rechnern und Datenbanken abgelegt sind, mit denen der Leitrechner (1) über Telekommunikationseinrichtungen verbunden ist.

4. Verfahren nach einem der Ansprüche 1 bis 3,
**dadurch gekennzeichnet, daß** die Bordrechner (8) und der Leitrechner (1) die telemetrisch zu übertragenden Datensätze nach Dringlichkeitskriterien sortiert nacheinander in der Weise übermittelt werden, indem immer die dringlichsten Daten vor den weniger dringlichen Daten übertragen werden.

5. Verfahren nach einem der Ansprüche 1 bis 4,
**dadurch gekennzeichnet, daß** ein Bordrechner (8) oder Leitrechner (1) anstelle von kompletten Datensätzen Kennschlüssel übermittelt, die dem empfangenden Rechner eine eigene Priorisierung bei der Abfrage der angebotenen Daten erlaubt.

6. Verfahren nach einem der Ansprüche 1 bis 5,
**dadurch gekennzeichnet, daß** von dem insgesamt in einem Bordrechner (8) verfügbaren Datenbestand nur ausgewählte Daten an den Leitrechner (1) übermittelt werden.

7. Verfahren nach einem der Ansprüche 1 bis 5,
**dadurch gekennzeichnet, daß** von einem Bordrechner (8) an den Leitrechner (1) zumindest diejenigen Daten telemetrisch übertragen werden, die dieser online zur Optimierung des von ihm per Datenaustausch kontrollierten Gesamtmaschinensystems benötigt.

8. Verfahren nach einem der Ansprüche 1 bis 6,
**dadurch gekennzeichnet, daß** zu speichernde Daten in demjenigen Rechner abgespeichert werden, in dem sie am häufigsten zur weiteren Verarbeitung benötigt werden.

9. Verfahren nach einem der Ansprüche 1 bis 8,
**dadurch gekennzeichnet, daß** Sensordaten der landwirtschaftlichen Maschinen und Geräte (2) bis (7) genutzt werden, um durch einen der Bordrechner (8) oder den Leitrechner (1) die Sensordaten oder auf den Sensordaten basierende Auswertedaten anzuzeigen.

10. Verfahren nach einem der Ansprüche 1 bis 9,
**dadurch gekennzeichnet, daß** der Leitrechner (1) einen zumindest teilweisen telemetrischen Datenaustausch zwischen einem Bordrechner (8) und externen Rechnern in online-Betrieb vermittelt.

11. Verfahren nach einem der Ansprüche 1 bis 10,
**dadurch gekennzeichnet, daß** die von Bordrechnern (8) ermittelten Betriebsdaten einer landwirtschaftlichen Maschine oder eines landwirtschaftlichen Gerätes dazu genutzt werden, um im Leitrechner (1) Grundwasserbelastungen zu ermitteln.

12. Verfahren nach einem der Ansprüche 1 bis 11,
**dadurch gekennzeichnet, daß** die von Bordrechnern (8) ermittelten Betriebsdaten einer landwirtschaftlichen Maschine oder eines landwirtschaftlichen Gerätes dazu genutzt werden, um vom Leitrechner (1) Dünge- bzw. Pflanzenschutzdokumentationen erstellen zu lassen.

13. Vorrichtung zur Durchführung des Verfahrens nach Anspruch 1,
**dadurch gekennzeichnet,**
**dass** ein oder mehrere der landwirtschaftliche Maschinen oder Geräte (2-7) ein mit dem Leitrechner (1) telemetrisch im Datenaustausch stehendes CAN-Bussystem (B) aufweisen und wobei der Datenaustausch mit dem Leitrechner (1) über ein Funkmodul (M5) erfolgt und das Funkmodul (M5) über einen eigenen Zugang zum CAN-Bussystem (B) verfügt.

14. Eine landwirtschaftliche Maschine oder Gerät nach Anspruch 13,
**dadurch gekennzeichnet, daß** das Funkmodul (M5) bidirektional Daten zwischen einem Leitrechner (1) und dem angeschlossenen CAN-Bussystem (B) austauscht.

15. Eine landwirtschaftliche Maschine oder Gerät nach Anspruch 13 oder 14,
**dadurch gekennzeichnet, daß** der Leitrechner (1) über das Funkmodul (M5) direkt Daten an Mikroprozessoren sendet, die an das CAN-Bussystem (B) angeschlossen sind.

## Claims

1. A method of optimising use of agricultural machines, wherein a main computer (1) and a plurality of agricultural machines and devices (2) to (7) which have at least one on-board computer (8) can exchange data with the main computer (1) telemetrically by way of transmitting and receiving devices,
**characterised in that**
- said data which can be exchanged between the main computer (1) and the on-board computers (8) of the plurality of agricultural machines and devices (2) to (7) are categorised in accordance with processing and memory location,
- they are subjected to further processing or stored depending on the respective category at the level of the agricultural machine or the device and
- the data telemetrically communicated to the level of the main computer are used to supplement the optimisation regulating circuits based on the data available in the individual machine by data which are not available in the individual machine and which are processed by the main computer (1) and which are transmitted by same to the individual machine,
and wherein categorisation includes the selection of the data to be transmitted from the on-board computers (8) to the main computer and from the main computer to the on-board computers (8).

2. A method according to claim 1 **characterised in that** besides the telemetrically communicated database from the machines for processing the data communicated to the agricultural machines the main computer (1) also falls back on software and data stocks stored in the main computer (1).

3. A method according to claim 1 or claim 2 **characterised in that** for processing the data to be communicated to the agricultural machines the main computer (1) can also fall back on software and data stocks which are stored in external computers and data banks to which the main computer (1) is connected by way of telecommunication devices.

4. A method according to one of claims 1 to 3 **characterised in that** the on-board computers (8) and the main computer (1) communicate the data sets to be telemetrically transmitted in succession sorted in accordance with urgency criteria **in that** the most urgent data are always transmitted before the less urgent data.

5. A method according to one of claims 1 to 4 **characterised in that** an on-board computer (8) or main computer (1) instead of complete data sets communicates identification keys which allow the receiving computer its own prioritisation in respect of querying the data offered.

6. A method according to one of claims 1 to 5 **characterised in that** only selected data are communicated to the main computer (1) from the data stock available overall in an on-board computer (8).

7. A method according to one of claims 1 to 5 **characterised in that** at least those data are telemetrically transmitted from an on-board computer (8) to the main computer (1), that same requires on-line for optimising the overall machine system which it controls by data exchange.

8. A method according to one of claims 1 to 6 **characterised in that** data to be stored are stored **in that** computer in which they are most frequently required for further processing.

9. A method according to one of claims 1 to 8 **characterised in that** sensor data of the agricultural machines and devices (2) to (7) are used to display the sensor data or evaluation data based on the sensor data by one of the on-board computers (8) or the main computer (1).

10. A method according to one of claims 1 to 9 **characterised in that** the main computer (1) implements an at least partial telemetric data exchange between an on-board computer (8) and external computers in an on-line mode.

11. A method according to one of claims 1 to 10 **characterised in that** the operational data ascertained by on-board computers (8) of an agricultural machine or an agricultural device are used to ascertain ground water levels in the main computer (1).

12. A method according to one of claims 1 to 11 **characterised in that** the operational data ascertained by on-board computers (8) of an agricultural machine or an agricultural device are used to provide for production by the main computer (1) of fertiliser or plant protection documentation.

13. Apparatus for carrying out the method according to claim 1 **characterised in that** one or more of the agricultural machines or devices (2-7) have a CAN bus system (B) which is in telemetric data exchange relationship with the main computer (1) and wherein data exchange with the main computer (1) is effected by way of a radio module (M5) and the radio module (M5) has its own access to the CAN bus system (B).

14. An agricultural machine or device according to claim 13 **characterised in that** the radio module (M5) bidirectionally exchanges data between a main computer (1) and the connected CAN bus system (B).

15. An agricultural machine or device according to claim 13 or claim 14 **characterised in that** the main computer (1) sends data by way of the radio module (M5) directly to microprocessors which are connected to the CAN bus system (B).

## Revendications

1. Procédé pour optimiser la mise en oeuvre de machines agricoles, dans lequel un ordinateur pilote (1) ainsi qu'une pluralité de machines et d'appareils agricoles (2) à (7) disposant d'au moins un ordinateur de bord (8) sont aptes à échanger des données par télémétrie avec l'ordinateur pilote (1) par l'intermédiaire de dispositifs d'émission et de réception, **caractérisé en ce que** ces données échangeables entre l'ordinateur pilote (1) et les ordinateurs de bord (8) de la pluralité de machines et d'appareils agricoles (2) à (7) sont catégorisées selon le lieu de traitement et de stockage, **en ce que** chaque catégorie est retraitée ou mémorisée au niveau de la machine agricole, respectivement de l'appareil, et **en ce que** les données transmises par télémétrie à l'ordinateur pilote sont utilisées pour compléter les circuits de régulation et d'optimisation reposant sur les données disponibles dans la machine concernée par des données non disponibles dans la machine concernée, élaborées par l'ordinateur pilote (1) et transmises par celui-ci à la machine concernée, et la catégorisation consistant à sélectionner les données à transmettre par les ordinateurs de bord (8) à l'ordinateur pilote et par l'ordinateur pilote aux ordinateurs de bord (8).

2. Procédé selon la revendication 1, **caractérisé en ce que**, pour élaborer les données transmises aux machines agricoles, l'ordinateur pilote (1) utilise aussi, en plus de la base de données transmise par télémétrie à partir des machines, des ensembles de données et des logiciels mémorisés dans l'ordinateur pilote (1).

3. Procédé selon la revendication 1 ou 2, **caractérisé en ce que**, pour élaborer les données à transmettre aux machines agricoles, l'ordinateur pilote (1) peut aussi utiliser des logiciels et des ensembles de données mémorisés dans des ordinateurs et des banques de données externes avec lesquels l'ordinateur pilote (1) est connecté par l'intermédiaire de dispositifs de télécommunication.

4. Procédé selon une des revendications 1 à 3, **caractérisé en ce que** les ordinateurs de bord (8) et l'ordinateur pilote (1) transmettent successivement les ensembles de données à transmettre par télémétrie, triés selon des critères de priorité, de façon que les données les plus prioritaires soient toujours transmises avant les données moins prioritaires.

5. Procédé selon une des revendications 1 à 4, **caractérisé en ce que**, au lieu d'ensembles de données complets, un ordinateur de bord (8) ou l'ordinateur pilote (1) transmet des clés qui permettent à l'ordinateur récepteur d'établir ses propres priorités pour l'interrogation des données fournies.

6. Procédé selon une des revendications 1 à 5, **caractérisé en ce que**, sur l'ensemble total de données disponible dans un ordinateur de bord (8), seules des données sélectionnées sont transmises à l'ordinateur pilote (1).

7. Procédé selon une des revendications 1 à 5, **caractérisé en ce que** les données transmises par télémétrie d'un ordinateur de bord (8) à l'ordinateur pilote (1) sont au moins celles dont ce dernier a besoin en ligne pour optimiser le système global de machines qu'il pilote par échange de données.

8. Procédé selon une des revendications 1 à 6, **caractérisé en ce que** les données à mémoriser sont mémorisées dans l'ordinateur où elles sont le plus fréquemment requises pour la suite du traitement.

9. Procédé selon une des revendications 1 à 8, **caractérisé en ce que** des données de capteurs des machines et appareils agricoles (2) à (7) sont utilisées pour afficher, par l'intermédiaire de l'un des ordinateurs de bord (8) ou de l'ordinateur pilote (1), les données de capteurs ou des données d'analyse basées sur les données de capteurs.

10. Procédé selon une des revendications 1 à 9, **caractérisé en ce que** l'ordinateur pilote (1) sert d'intermédiaire en ligne à un échange de données télémétrique au moins partiel entre un ordinateur de bord (8) et des ordinateurs externes.

11. Procédé selon une des revendications 1 à 10, **caractérisé en ce que** les données de fonctionnement d'une machine agricole ou d'un appareil agricole recueillies par des ordinateurs de bord (8) sont utilisées par l'ordinateur pilote (1) pour déterminer l'impact sur la nappe phréatique.

12. Procédé selon une des revendications 1 à 11, **caractérisé en ce que** les données de fonctionnement d'une machine agricole ou d'un appareil agricole recueillies par les ordinateurs de bord (8) sont utilisées par l'ordinateur pilote (1) pour établir des relevés de fertilisation, respectivement de traitements phytosanitaires.

13. Dispositif pour mettre en oeuvre le procédé selon la revendication 1, **caractérisé en ce qu'**un ou plusieurs des machines ou appareils agricoles (2-7) comportent un système de bus CAN (B) apte à échanger des données par télémétrie avec l'ordinateur pilote (1), et l'échange de données avec l'ordinateur pilote (1) s'effectue par l'intermédiaire d'un radiomodule (M5) et le radiomodule (M5) dispose d'un accès propre au système de bus CAN (B).

14. Machine ou appareil agricole selon la revendication 13, **caractérisé en ce que** le radiomodule (M5) échange des données en mode bidirectionnel entre un ordinateur pilote (1) et le système de bus CAN (B) connecté.

15. Machine ou appareil agricole selon la revendication 13 ou 14, **caractérisé en ce que**, par l'intermédiaire du radiomodule (M5), l'ordinateur pilote (1) envoie des données directement à des microprocesseurs connectés au système de bus CAN (B).
